# EUROPEAN PATENT SPECIFICATION

(11) **EP 1 499 812 B1**
(45) Date of publication and mention of the grant of the patent: **19.04.2006**
(21) Application number: 03712545.7
(22) Date of filing: 08.04.2003
(51) Int. Cl.: F16D 41/20

(54) **WRAP SPRING CLUTCH**
SPRINGFEDERKUPPLUNG
EMBRAYAGE A RESSORT DE COMPRESSION ENROULE

(30) Priority: 12.04.2002 DE 10216155
(43) Date of publication of application: 26.01.2005
(73) Proprietor: Philips Intellectual Property & Standards GmbH, 20099 Hamburg (DE); Koninklijke Philips Electronics N.V., 5621 BA Eindhoven (NL)
(72) Inventor: KUNZE, Norbert, Philips Intel. Prop. & Standards, 52066 Aachen (DE)
(74) Representative: Meyer, Michael Josef
(86) International application number: PCT/IB2003/001438
(87) International publication number: WO 2003/087611

(56) References cited:
- DE-C- 896 279
- US-A- 5 947 409
- US-A- 6 059 086
- PATENT ABSTRACTS OF JAPAN vol. 1997, no. 01, 31 January 1997 (1997-01-31) & JP 8 232951 A (KATO FUMIO), 10 September 1996 (1996-09-10)

## Description

The invention relates to a wrap spring clutch between dutch partners as defined in the preamble of the independent claim 1.

Such clutches of wrap spring construction are known in the form of unilaterally or bilaterally acting clutches. The loops of the wrap spring enclose without clearance an outer surface, for example the surface of a friction partner in the form of a pin. The end of a final loop of the wrap spring is bent outwards and forms a driving tang, which is guided in a driving opening, a slot or a groove in the outer clutch partner. Since the loops fit closely on the pin, a frictional connection is constantly present.

In the case of unilaterally acting clutches, the direction of rotation is locked in the one direction against rotation, because the loops immediately grip the outer surface of the pin tightly. The locking action in the locking direction takes effect instantly without allowing any substantial relative rotation of the clutch partners. In the other direction the dutch constitutes a frictional connection for a torque. In the case of bilaterally acting wrap spring clutches, a frictional connection exists in both directions, wherein it is necessary for tolerance reasons to provide a certain relative circumferential backlash between the clutch partners, within which the wrap spring is not moved upon rotation of the clutch partners. In this way, no slipping moment takes effect and the rotational position of the clutch partners relative to one another is undefined.

United States Patent No. 5,947,409 discloses a spring finger assembly that has a shaft and a roller disposed around the shaft. Roller and shaft are connected by a dutch spring that has a first portion that is clamping to the shaft under pretension and a second portion that contacts the inside surface of the roller under pretension.

It is an object of the invention to develop a wrap spring clutch in such a way that, in the case of a unilateral construction, it does not effect blocking instantly in the locking direction but rather is caused to block with gradually increasing torque and, in the case of a bilateral construction, no undefined rotational position of the clutch partners relative to one another is present in the middle position.

The object of effecting blocking only after an increase in torque is achieved according to the invention as defined in the characterising part of the independent claim 1.

Upon tightening of the driving tang, the loop or loops which has/have a larger internal diameter firstly reduce(s) its/their diameter. Starting from a larger diameter, where the starting torque is greater than or equal to 0 Nmm, the torque increases gradually as the diameter reduces until, blockingly engaged, the driving clutch partner drives the clutch partner to be driven. The greater the number of loops of larger diameter, the slower the increase in driving torque, because, when rotation in the blocking direction begins, the clutch partners may be rotated against the bending force of the non-close-fitting spring end, wherein the loops which do not fit closely steadily conform increasingly to the surface of the first clutch partner, for example a pin, until finally the clutch blocks or grips.

The starting torque level is equal to 0, if the non-close-fitting loops may freely assume their relaxed position. However, a starting torque may be desirable. A further development of the invention is therefore characterized in that the internal diameter of the inner cylindrical surface of the second clutch partner limits the free expansion of the loop (loops) of larger diameter and thus pretensions it (them).

By limiting the external diameter of the loops of larger diameter by means of the inner surface of the second clutch partner, a pretension is achieved which corresponds to the starting moment. The starting torque may thus be adjusted by the internal diameter of the inner surface of the second clutch partner.

In a further development of the invention, it is also possible to modify the construction in such a way that the internal diameter of the inner cylindrical surface of the second clutch partner is so dimensioned that the loop (loops) does (do) not fit closely on the second clutch partner, may expand freely and is (are) not pre-tensioned. In this case, it is possible to start deliberately from the starting moment 0.

A further development of the invention is characterized in that the second final loop at the other free end of the wrap spring, which belongs to the portion whose loops lie with a close fit against the first clutch partner, is shaped into a second outwardly projecting driving tang, which may be actuated by a second driver of the second clutch partner, wherein a defining wall is present at a distance from this second driver and the second driving tang finds a clearance between the driver and the defining wall.

In this way, the mutual rotational position of the clutch partners relative to one another may be precisely defined. The stop wall has a clearance relative to the second driving tang which is so dimensioned that contact arises between the second driving tang and the stop wall before the non-close-fitting first loop (loops) at the first wrap spring end is (are) rotated far enough for the clutch to effect blocking. In the event of further rotation, the second final loop of the wrap spring part fitting closely on the clutch partner is loosened in the second direction of rotation. The wrap spring opens slightly and slides on the clutch partner in the second direction. If the externally acting torque is removed, the first clutch partner rotates back under the effect of the diminishing starting moment. In this way, the diameter of the non-close-fitting loop (loops) increases again, either until the spring is wholly relaxed (starting moment = 0 Nmm) or until it fits closely on the inner surface of the second clutch partner. In both cases, the end position is reached. The rotational position is defined.

The invention also relates to a drive for data media disks, in which the wrap spring clutch according to the invention is used. The wrap spring clutch is preferably used in the context of the transmission of rotary motion to the data media disk.

The invention will be further described with reference to examples of embodiments shown in the drawings to which, however, the invention is not restricted. In the Figures:
Fig. 1 is an exploded, diagrammatic representation of a unilateral embodiment of a wrap spring clutch according to the invention, having a loop of larger diameter,
Fig. 2 is a diagrammatic representation of the wrap spring according to Fig. 1 with a loop of larger diameter,
Fig. 3 is a diagrammatic representation of a first clutch partner with a friction pin, on which the wrap spring is positioned, together with drive plates for a functional component,
Fig. 4 shows the second clutch partner of the wrap spring clutch in plan view, with fitted wrap spring,
Fig. 5 shows, as a variant, an exploded diagrammatic representation of a bilateral construction of the wrap spring clutch according to Figs. 1 to 4, wherein the wrap spring is provided with drivers at both final loops,
Fig. 6 is a diagrammatic representation of the wrap spring of the wrap spring clutch according to Fig. 5,
Fig. 7 is a diagrammatic representation of the wrap spring according to Fig. 6 above the second clutch partner according to Fig. 5 with driving openings for both driving tangs,
Fig. 8 is a plan view of the wrap spring, with driving tangs, located in the second clutch partner according to Figs. 5 and 7.

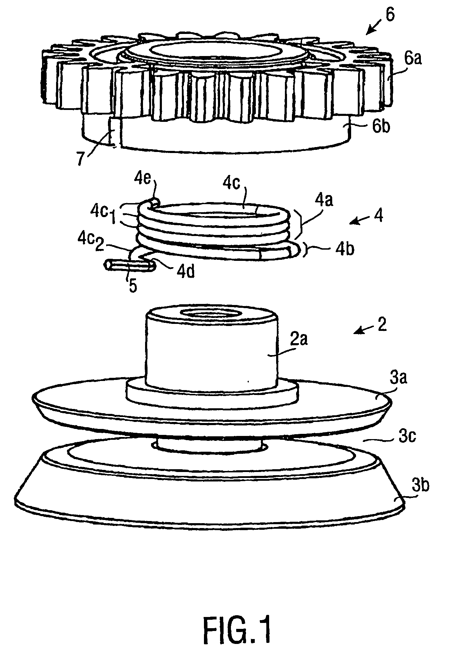

Fig. 1 is a diagrammatic, exploded representation of a wrap spring clutch 1. The wrap spring clutch 1 is preferably used in drives for data media disks in the context of the transmission of rotary motion to the data media disk. No data media disk is shown.

The wrap spring clutch 1 comprises a first clutch partner in the form of a friction pin 2 with an outer cylindrical surface 2a. The friction pin 2 is connected with two drive plates 3a and 3b. Between the drive plates 3a and 3b there is located a drive gap 3c, in which the edge of a digital data medium may be guided, for example. Above the friction pin 2 there is located a wrap spring 4. The wrap spring 4 comprises portions 4a and 4b with differently constructed loops 4c₁ and 4c₂. Fig. 1 clearly shows the two portions 4a and 4b. The portion 4a comprises loops 4c₁, whose diameter is such that the loops 4c₁ of this portion 4a fit with friction onto the outer cylindrical surface 2a of the friction pin 2. In the drawing, the portion 4b comprises only one loop 4c₂. If the wrap spring clutch 1 is appropriately otherwise dimensioned, the portion 4b may also comprise a plurality of loops 4c₂, however. The loop 4c₂ has a larger diameter than the loop 4c₁.

The wrap spring 4 has two loop ends 4d and 4e. The loop end 4d is bent outwards to form a first driving tang 5. In Fig. 1, the loop end 4e protrudes at a tangent, but only insignificantly out of the cylindrical area.

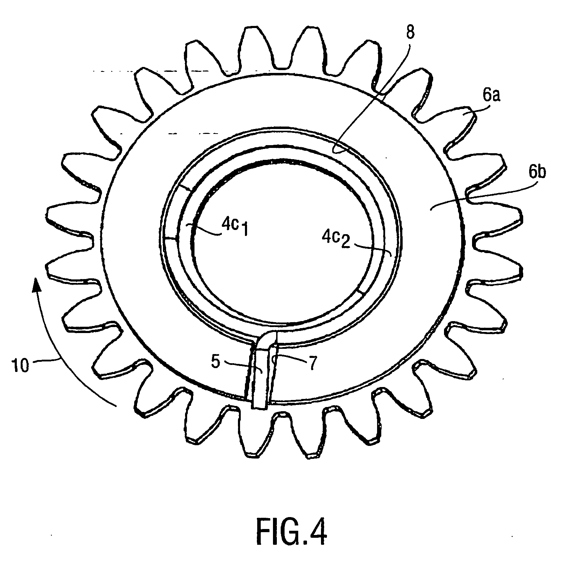

In Fig. 1, the second clutch partner 6 is shown above the wrap spring 4. This clutch partner 6 has a toothed rim 6a on its outside. Rotary motion may be transmitted thereto by a revolving drive, not shown. The second clutch partner 6 has a sleeve 6b, which bears the toothed rim 6a. The sleeve 6b has an inner cylindrical surface 8 visible in Fig. 4. In addition, the sleeve 6b has a driving opening 7 for the driving tang 5.

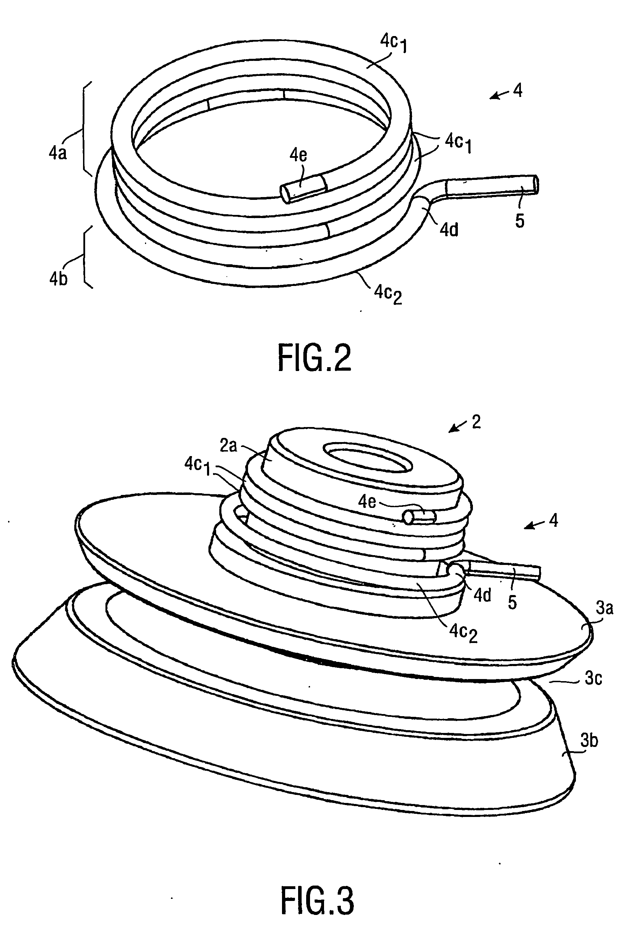

Fig. 2 clearly shows the portions 4a and 4b of the loops 4. The loops 4c₁ of the loop area 4a have a uniform diameter tailored to fit the friction pin 2, while the loop 4c₂ of the loop area 4b clearly exhibits a larger diameter, in particular where full freedom of movement is present. The driving tang 5 is bent outwards from the loop end 4d. It should be noted at this point that the starting torque, which the second clutch partner, i.e. the sleeve 6b, exerts on the first clutch partner, the friction pin 2, is equal to 0 Nm if the loop 4c₂ can swing out freely. This is the case if the internal diameter of the inner cylindrical surface 8 of the second clutch partner 6 is so dimensioned that the loop (loops) 4c₂ does (do) not fit closely against the second clutch partner 6 and is (are) thus not pre-tensioned.

In Fig. 3, the wrap spring 4 has been pushed onto the friction pin 2; in the rest state it sits with friction on the friction pin 2.

Fig. 4 shows that the inner cylindrical surface 8 of the sleeve 6b limits the external diameter of the loop 4c₂. The inner cylindrical surface 8 of the sleeve 6b thus limits the free expansion of the loop 4c₂ and thus pretensions it. By limiting the external diameter of the loop 4c₂ by means of the inner cylindrical surface 8 of the sleeve 6b, a pretension is achieved which corresponds to the starting moment. The starting torque may thus be adjusted by the diameter of the inner surface 8 of the sleeve 6b.

If the toothed rim 6a moves in the indicated direction of rotation 10, on tightening of the driving tang 5 firstly the diameter of the loop 4c₂ reduces. Starting from a larger diameter, where the starting torque is predetermined by the diameter of the surface 8, as the diameter diminishes the torque increases gradually, until the clutch is blockingly engaged, i.e. the driving clutch partner, the sleeve 6b with the toothed rim 6a, drives the clutch partner to be driven, i.e. the friction pin 2 with the drive plates 3a and 3b. The greater the number of loops 4c₂ of larger diameter, the more drawn out the increase in torque.

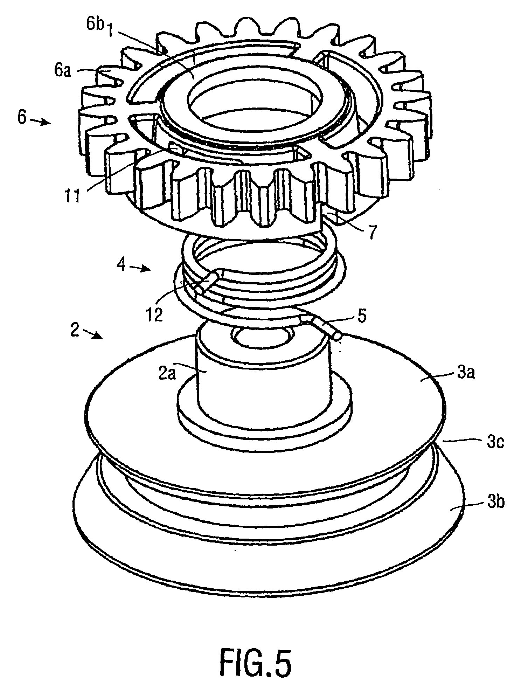

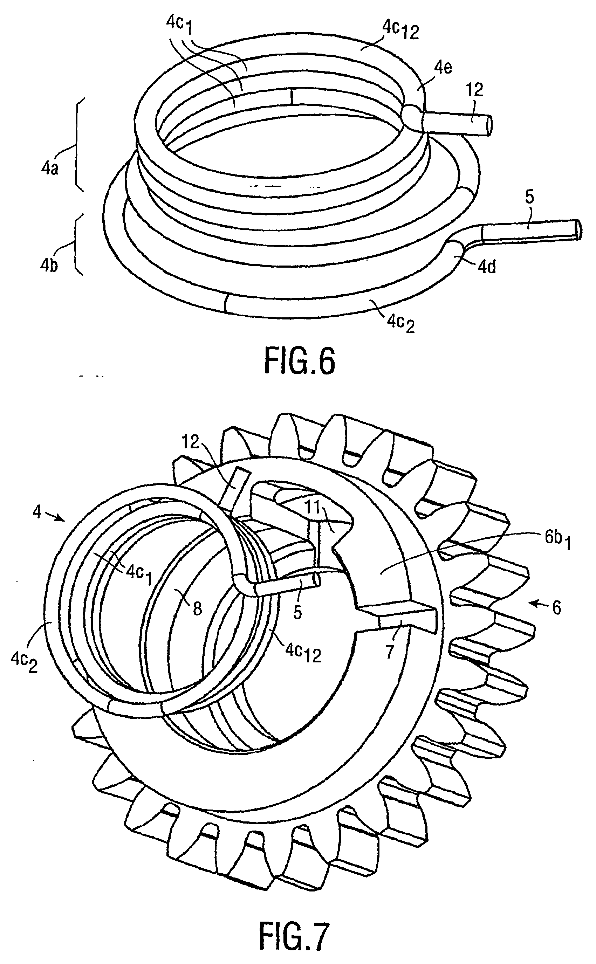

Fig. 5 shows a variant, a further improvement of the wrap spring clutch according to Figs. 1 to 5. The wrap spring clutch 1 again comprises a first clutch partner in the form of a friction pin 2 with an outer cylindrical surface 2a. The friction pin 2 is connected with two drive plates 3a and 3b. Between the drive plates 3a and 3b there is located a drive gap 3c, in which the edge of a data medium, inter alia, may be guided, for example. Above the friction pin 2 there is located a wrap spring 4. The wrap spring 4 comprises portions 4a and 4b with differently constructed loops 4c₁ and 4c₂. Figs. 5 and 6 clearly show the two portions 4a and 4b. The portion 4a comprises loops 4c₁, whose diameter is such that the loops 4c₁ of this portion 4a fit with friction onto the outer cylindrical surface 2a of the friction pin 2. In the drawing, the portion 4b comprises only one loop 4c₂. If the wrap spring clutch 1 is appropriately otherwise dimensioned, the portion 4b may also comprise a plurality of loops 4c₂, however. The loop 4c₂ has a larger diameter than the loops 4c₁.

The wrap spring 4 has two loop ends 4d and 4e. The loop end 4d is bent outwards to form a first driving tang 5. The loop end 4e is likewise bent outwards, forming a driving tang 12.

In Fig. 5 the second clutch partner 6 is shown above the wrap spring 4. This clutch partner 6 has the toothed rim 6a on its outside. Rotary motion may be transmitted thereto by a revolving drive, not shown. The second clutch partner 6 has the sleeve 6b₁, which bears the toothed rim 6a. The sleeve 6b₁ has an inner cylindrical surface 8 visible in Fig. 5. In addition, the sleeve 6b₁ has a driving opening 13 in which the driving tang 12 engages. In the event of rotary motion, the driving tang 12 has freedom of movement in the driving opening 13 between a stop wall 11 acting as a driver and a defining wall 14.

Fig. 6 clearly shows the portions 4a and 4b of the loops 4. The loops 4c₁ of the loop area 4a have a uniform diameter tailored to fit the friction pin 2, while the loop 4c₂ of the loop area 4b clearly exhibits a larger diameter, in particular where full freedom of movement is present. The driving tang 5 is bent outwards from the loop end 4d. The driving tang 12 is bent outwards from the loop end 4e. If the loop 4c₂ of larger diameter can swing out freely, the starting torque is equal to 0 Nm.

Fig. 7 shows the wrap spring 4 in front of the second clutch partner 6, the toothed wheel 6a with the somewhat modified sleeve 6b₁. The driving tang 5 may engage in the driving opening 7. The driving tang 12 may engage in the driving opening 13.

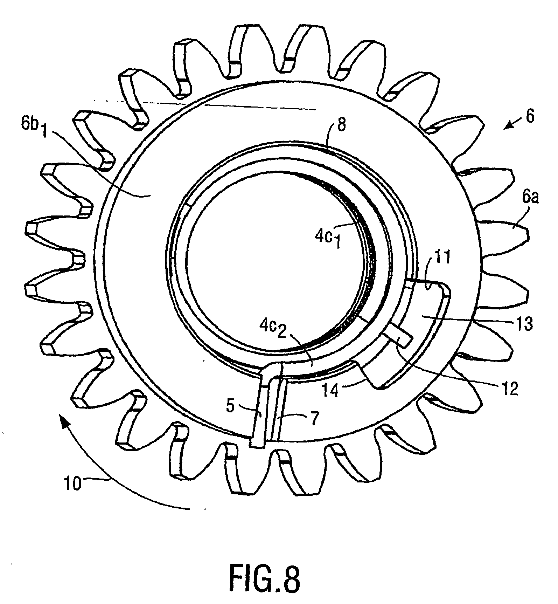

Fig. 8 shows that the inner cylindrical surface 8 of the sleeve 6b₁ limits the external diameter of the loop 4c₂. The inner cylindrical surface 8 of the sleeve 6b₁ thus limits the free expansion of the loop 4c₂ and thus pretensions it. By limiting the external diameter of the loop 4c₂ by means of the inner cylindrical surface 8 of the sleeve 6b₁, a pretension is achieved which corresponds to the starting moment. The starting torque may thus be adjusted by the inner surface 8 of the sleeve 6b₁.

If the toothed rim 6a moves in the indicated direction of rotation 10, on tightening of the driving tang 5 firstly the diameter of the loop 4c₂ reduces. Starting from a starting torque predetermined by the diameter of the surface 8, the torque increases gradually, until the driving tang 12 on the final loop 4c₁₂ is rotated away from the stop wall 11, whereby the spring begins to slide over the cylinder of the first clutch partner 2. If the external torque is removed, the first clutch partner 2 rotates back under the effect of the diminishing starting moment. In this way, the diameter of the non-close-fitting loop 4c₂ increases again, either until the spring is wholly relaxed (starting moment = 0 Nmm) or until it fits closely against the inner surface 8 of the sleeve 6b₁ of the second clutch partner 6. In both cases, the end position is reached. The rotational position is defined.

The second driving opening 13 is so designed that, in the event of rotation of the second clutch partner 6 contrary to the direction of rotation 10, the defining wall 14 of the driving opening 13 does not abut against the stop wall 11 of the sleeve 6b₁, to prevent blocking. The wrap spring 4 slides over the cylinder 2, wherein the distance between the stop wall 11 and the driving tang 12 remains approximately constant.

## Claims

1. A wrap spring clutch between clutch partners (2, 6), of which the first, inner clutch partner (2) comprises an outer cylindrical surface (2a) about which the loops (4c) of a wrap spring (4) are positioned, and of which the second, outer clutch partner (6) comprises an inner cylindrical surface (8), inside which the loops (4c) of the wrap spring (4) are located, wherein only the loops (4c) of a first portion (4a) of the wrap spring (4) are wound with their internal diameters fitting closely under pretension on the outer surface (2a) of the first clutch partner (2), and in that at least part of a first loop (4c₂) of a second portion (4b) of the wrap spring (4) exhibits a larger internal diameter in the rest state than the outer surface (2a) of the first clutch partner (2), **characterized in that** the ends (4d, 4e) or one of the ends of the wrap spring (4) project out of the loop area and form a driving tang (5), which may be actuated by a driver (7) of the second clutch partner, and the second portion (4b) of the wrap spring (4) adjoining the driving tang (5).

2. A wrap spring clutch as claimed in claim 1, **characterized in that** the internal diameter of the inner cylindrical surface (8) of the second clutch partner (6) limits the free expansion of the loop (loops) (4c₂) of the second portion of larger diameter and thus pretensions it (them).

3. A wrap spring clutch as claimed in claim 1 **characterized in that** the internal diameter of the inner cylindrical surface (8) of the second clutch partner (6) is so dimensioned that the loop (loops) (4c₂) of the second portion does (do) not fit closely on the second clutch partner (6), may expand freely and is (are) not pre-tensioned.

4. A wrap spring clutch as claimed in one or more of claims 1 to 3, **characterized in that** th second final loop (4c₁₂) at the other free end of the wrap spring (4), which belongs to the first portion (4a) whose loops (4c₁) lie with a close fit against the outer surface of the first clutch partner (2), is shaped into a second outwardly projecting driving tang (12), which may be actuated by a second driver (11) of the second clutch partner (6), wherein a defining wall (14) is present at a distance from this second driver (11) and the second driving tang (12) finds a clearance between the driver (11) and the defining wall (14).

5. A drive for data media disks having a wrap spring clutch as claimed in claim 1.

## Patentansprüche

1. Schlingfederkupplung zwischen Kupplungspartnem (2, 6), von denen der erste, innere Kupplungspartner (2) eine äußere zylindrische Oberfläche (2a) aufweist, um die Schlingen (4c) einer Schlingfeder (4) gelegt sind, und von denen der zweite, äußere Kupplungspartner (6) eine innere zylindrische Oberfläche (8) aufweist, innerhalb der sich die Schlingen (4c) der Schlingfeder (4) befinden, wobei nur die Schlingen (4c) eines ersten Teilbereichs (4a) der Schlingfeder (4) mit ihren Innendurchmessern auf der äußeren Oberfläche (2a) des ersten Kupplungspartners (2) mit Vorspannung anliegend gewickelt sind, und wobei wenigstens ein Teil einer ersten Schlinge (4c₂) eines zweiten Teilbereiches (4b) der Schlingfeder (4), ansetzend am Mitnehmerarm (5), im Ruhezustand einen größeren Innendurchmesser aufweist als die äußere Oberfläche (2a) des ersten Kupplungspartners (2), **dadurch gekennzeichnet, dass** die Enden (4d,4e) oder eines der Enden der Schlingfeder (4) aus dem Schlingbereich hervorstehen und einen Mitnehmerarm (5) bilden, der von einem Mitnehmer (7) des zweiten Kupplungspartners betätigbar ist, und der zweite Teilbereich (4b) der Schlingfeder (4) an dem Mitnehmer arm (5) anliegt.

2. Schlingfederkupplung nach Anspruch 1, **dadurch gekennzeichnet, dass** der Innendurchmesser der inneren zylindrischen Oberfläche (8) des zweiten Kupplungspartners (6) die freie Ausdehnung der Schlinge (Schlingen) (4c₂) des zweiten Teilbereichs mit größerem Durchmesser begrenzt und diese damit vorspannt.

3. Schlingfederkupplung nach Anspruch 1, **dadurch gekennzeichnet, dass** der Innendurchmesser der inneren zylindrischen Oberfläche (8) des zweiten Kupplungspartners (6) so bemessen ist, das die Schlinge (Schlingen) (4c₂) des zweiten Teilbereichs am zweiten Kupplungspartner (6) nicht anliegen, sich frei ausdehnen können und nicht vorgespannt sind.

4. Schlingfederkupplung nach einem oder mehreren der Ansprüche 1 bis 3, **dadurch gekennzeichnet, dass** die zweite Endschlinge (4c₁₂) am anderen freien Ende der Schlingfeder (4), die zu dem ersten Teilbereich (4a) gehört, dessen Schlingen (4c₁) passend an der Außenfläche des ersten Kupplungspartners (2) anliegen, zu einem zweiten nach außen hervorstehenden Mitnehmerarm (12) geformt ist, der von einem zweiten Mitnehmer (11) des zweiten Kupplungspartners (6) betätigbar ist, wobei in einem Abstand von diesem zweiten Mitnehmer (11) eine Begrenzungswand (14) vorhanden ist und der zweite Mitnehmerarm (12) zwischen dem Mitnehmer (11) und der Begrenzungswand (14) ein Freispiel vorfindet.

5. Laufwerk für Informationsträgerplatten mit einer Schlingfederkupplung nach Anspruch 1.

## Revendications

1. Embrayage à ressort enroulé entre des composants d'embrayage (2, 6), dont le premier composant d'embrayage, intérieur (2), comprend une surface cylindrique extérieure (2a) autour de laquelle les spires (4c) du ressort enroulé (4) sont positionnées, et dont le second composant d'embrayage, extérieur (6), comprend une surface cylindrique intérieure (8), à l'intérieur de laquelle les spires (4c) du ressort enroulé (4) sont situées, seules les spires (4c) d'une première portion (4a) du ressort enroulé (4) étant bobinées avec leur diamètre intérieur s'appliquant fermement par précontrainte sur la surface extérieure (2a) du premier composant d'embrayage (2), et au moins une partie d'une première spire (4c₂) d'une seconde portion (4b) du ressort enroulé (4) présentant un plus grand diamètre intérieur à l'état de repos que la surface extérieure (2a) du premier composant d'embrayage (2), **caractérisé en ce que** les extrémités (4d, 4e) ou une des extrémités du ressort enroulé (4) ressort(ent) de la zone de spires et forme(nt) un ergot d'entraînement (5) qui peut être actionné par un entraîneur (7) du second composant d'embrayage, et **en ce que** la seconde portion (4b) du ressort enroulé (4) est contiguë à l'ergot d'entraînement (5).

2. Embrayage à ressort enroulé selon la revendication 1, **caractérisé en ce que** le diamètre intérieur de la surface cylindrique intérieure (8) du second composant d'embrayage (6) limite la libre expansion de la (des) spire(s) (4c₂) de la seconde portion de plus grand diamètre, et donc la (les) précontraint.

3. Embrayage à ressort enroulé selon la revendication 1, **caractérisé en ce que** le diamètre intérieur de la surface cylindrique intérieure (8) du second composant d'embrayage (6) est dimensionné de telle sorte que la (les) spire(s) (4c₂) de la seconde portion ne s'applique(nt) pas fermement sur le second composant d'embrayage (6), peut (peuvent) s'étendre librement et n'est (ne sont) pas précontrainte(s).

4. Embrayage à ressort enroulé selon une ou plusieurs des revendications 1 à 3, **caractérisé en ce que** la seconde dernière spire (4c₁₂) à l'autre extrémité libre du ressort enroulé (4), qui appartient à la première portion (4a) dont les spires (4c1) s'appliquent fermement contre la surface extérieure du premier composant d'embrayage (2), prend la forme d'un second ergot d'entraînement ressortant vers l'extérieur (12), qui peut être actionné par un second entraîneur (11) du second composant d'embrayage (6), une paroi de définition (14) étant présente à une certaine distance de ce second entraîneur (11), et le second ergot d'entraînement (12) trouvant un espace libre entre l'entraîneur (11) et la paroi de définition (14).

5. Entraînement pour disques de stockage de données disposant d'un embrayage à ressort enroulé selon la revendication 1.
